# EUROPEAN PATENT SPECIFICATION

(11) **EP 2 881 345 B1**
(45) Date of publication and mention of the grant of the patent: **21.09.2016**
(21) Application number: 14196669.7
(22) Date of filing: 05.12.2014
(51) Int. Cl.: B65G 47/86

(54) **Line to convey containers, in particular bottles**
Leitung zur Förderung von Behältern, insbesondere Flaschen
Ligne pour transporter des récipients, en particulier des bouteilles

(30) Priority: 05.12.2013 IT TO20131000
(43) Date of publication of application: 10.06.2015
(73) Proprietor: Sidel S.p.a. Con Socio Unico, 43100 Parma (IT)
(72) Inventor: Raffaini, Nicola, 43100 PARMA (IT); Zoni, Roberto, 43100 PARMA (IT)
(74) Representative: Manconi, Stefano

(56) References cited:
- EP-A1- 2 360 109
- WO-A1-03/078285
- WO-A1-2011/047808

## Description

The present invention relates to a line to convey containers, in particular bottles.

In the bottling industry, it is known to provide a line to convey bottles of the type normally comprising a plurality of feeding wheels, which are arranged in sequence to one another, are mounted so as to rotate in a continuous manner around respective rotation axes parallel to each other, and are connected to each other in correspondence of respective transferring stations.

Each feeding wheel is provided with a plurality of pick and place units, which are uniformly distributed around its respective rotation axis, and are fed by the feeding wheel itself along a given path.

Each pick and place unit of at least part of the feeding wheels comprises a pair of picking organs mounted so as to rotate one with respect to the other between a clamping position and a releasing position of a respective bottle.

The two picking organs are provided with respective gears coupled one to the other, and are moved, and normally maintained in their clamping position by a spring hooked to one of the picking organs or interposed between the picking organs themselves.

The two picking organs are moved to their releasing position against the action of the spring by a cam actuating device comprising, for each pick and place unit, at least one respective tappet carried by one of the picking organs and engaged in a cam, which extends around the rotation axis of the respective feeding wheel between the respective transferring stations.

The document EP 2 360 109 A1 discloses a line according to the preamble of claim 1. The picking organs are actuated by a magnet.

The known lines to convey bottles of the type described above have some drawbacks mainly deriving from the fact that, to maintain the picking organs in their releasing position, the cam must extend at least between the respective transferring stations and is, therefore, relatively long and costly.

It is an object of the present invention to provide a line to convey containers, in particular bottles, that is free from the drawbacks described above and which is simple and inexpensive to implement.

According to the present invention, there is provided a line to convey containers, in particular bottles, as claimed in the appended claims.

The present invention will now be described with reference to the accompanying drawings, which illustrate an example of a non-limiting embodiment, wherein:
Figure 1 is a schematic plan view, with parts removed for clarity, of a preferred embodiment of the conveying line of the present invention;
Figure 2 is a schematic plan view, with parts removed for clarity, of a detail of the conveying line of Figure 1;
Figure 3 is a perspective view of the detail of Figure 2;

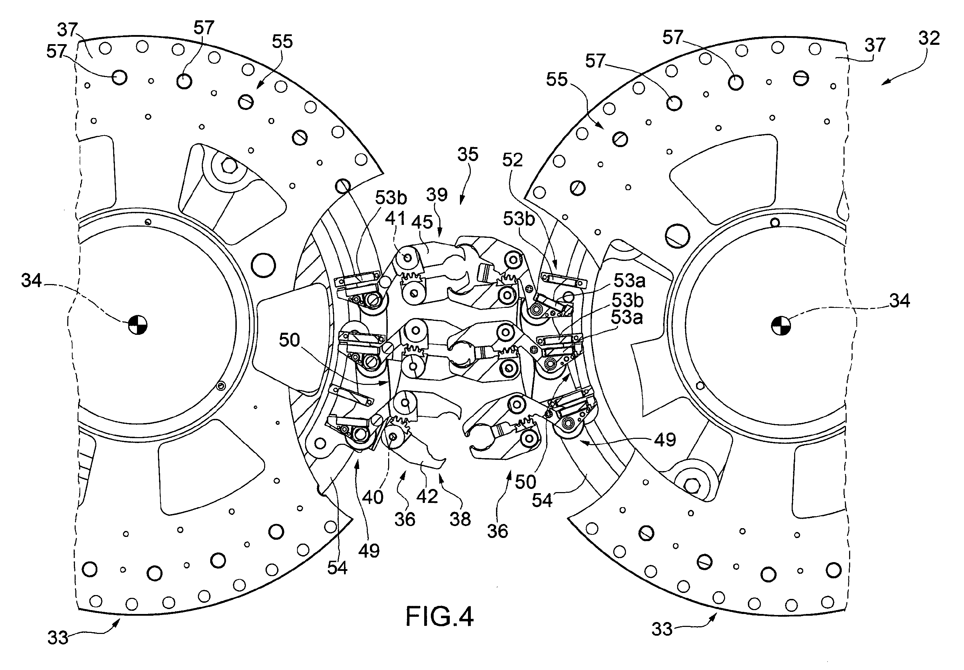

Figure 4 is a schematic plan view, with parts removed for clarity, of a further embodiment of the conveying line of Figure 1;

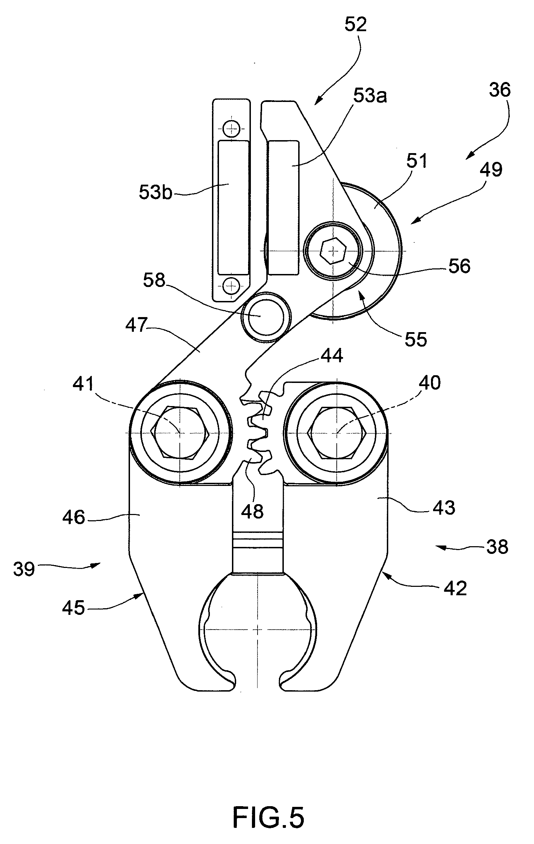

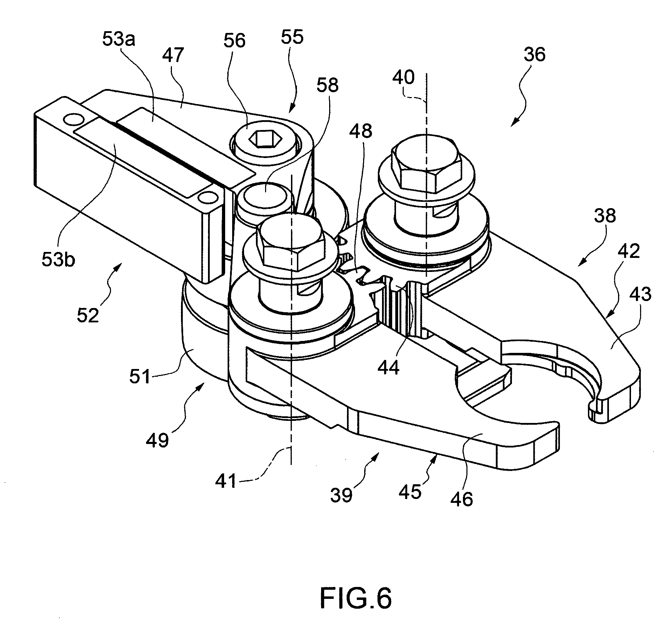

Figure 5 is a schematic plan view, with parts removed for clarity, of a detail of the conveying line of Figure 4; and Figure 6 is a perspective view of the detail of Figure 5.

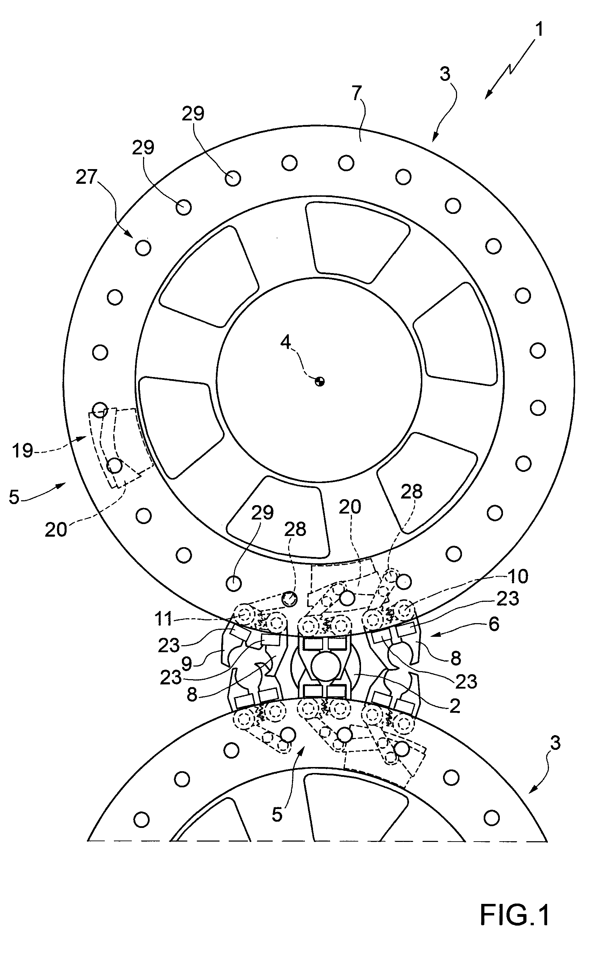

With reference to figure 1, with 1 is shown, as a whole, a line to convey containers, in this case bottles 2, along a given path P.

The line 1 comprises a plurality of feeding wheels 3, which are mounted so as to rotate in a continuous manner around respective rotation axes 4 substantially vertical and parallel to each other, and are connected together in correspondence of respective transferring stations 5.

Each wheel 3 is provided with a plurality of pick and place units 6, which are mounted below an upper disc 7 of the wheel 3, and are uniformly distributed around respective axis 4.

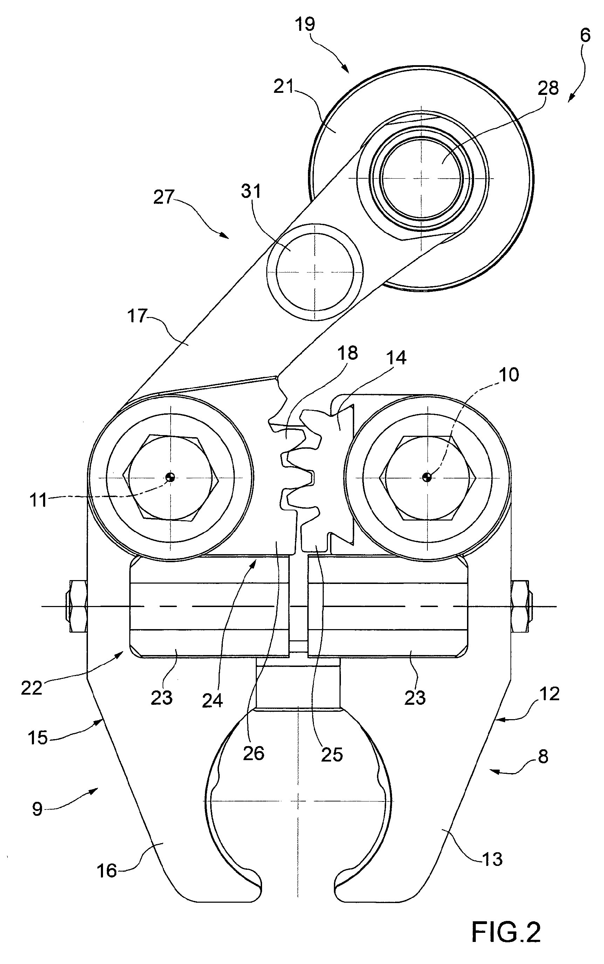

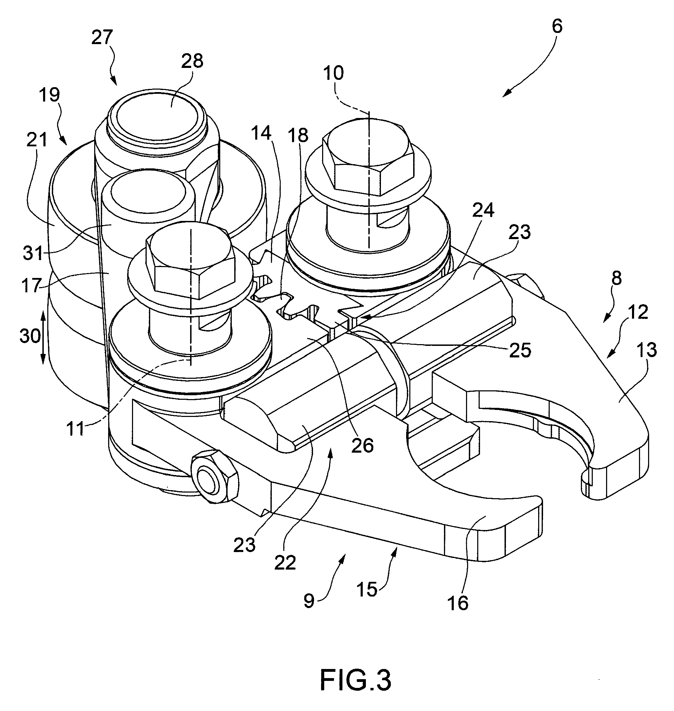

As illustrated in Figures 1, 2, and 3, each unit 6 of at least part of the wheels 3 comprises two picking organs 8, 9, which are mounted along a perimeter edge of the respective wheel 3 to rotate around respective rotation axes 10, 11 parallel to each other and to axes 4, and are movable one with respect to the other between a clamping position and a releasing position of a bottle 2.

The organ 8 comprises a crank 12 comprising, in turn, a substantially flat shaped jaw 13 made of a metallic material, and a gear 14, which extends around the axis 10, is made of a plastic material, and is locked by interference in a corresponding seat formed through the jaw 13 parallel to the axis 10 itself.

The organ 9 comprises a rocker arm 15, which is made of metallic material, has a first arm defining a shaped jaw 16 which cooperates with the jaw 13, and also has a second arm 17.

The organ 9 has, furthermore, a gear 18, which extends around the axis 11, is made in a single piece with the rocker arm 15, and is coupled to the gear 14.

The units 6 of each wheel 3 are moved between their clamping positions and their releasing positions by a cam actuating device 19 comprising, for each station 5, a respective cam 20 fixed to a support frame (not shown) of the wheel 3 and, for each unit 6, a respective tappet 21, which is mounted to a free end of the arm 17 of the respective rocker arm 15, and is configured to engage the cams 20.

The organs 8, 9 of each unit 6 are locked in their clamping position by a magnetic clamping device 22 comprising two magnets 23 of opposite pole mounted one on the jaw 13 and the other on jaw 16 so as to face each other when the organs 8, 9 are arranged in their clamping position.

Each unit 6 also comprises a limit stop device 24 to stop the jaws 13, 16 in their clamping position in the absence of the bottle 2 so as to avoid the collision between the magnets 23.

The device 24 comprises two teeth 25, 26, which are formed at the ends of the gears 14 and, respectively, 18, are adjacent to respective magnets 23, and are configured so as to come in contact one with the other before the magnets 23 themselves.

The organs 8, 9 of each unit 6 are locked in their releasing position by a magnetic clamping device 27 comprising two magnets 28, 29 of opposite pole.

The magnet 28 is fixed on the upper face of the arm 17, is mounted above the tappet 21, is aligned to the tappet 21 itself in a vertical direction 30 parallel to the axis 4, and is moved by the rocker arm 15 around respective axis 11.

The magnet 29 is fixed to the disc 7, and is mounted along the feeding path of the corresponding magnet 28 around respective axis 11.

In other words, as a result of the displacement of the organs 8, 9 in their releasing position, the magnet 28 is moved by the rocker arm 15 around the respective axis 11 so as to align with the corresponding magnet 29 in the direction 30.

Each unit 6 also comprises a spacer 31, which is fixed on the upper face of the arm 17, is facing the disc 7, and has a height, measured parallel to the direction 30, substantially equal to the distance between the disc 7 and the arm 17 also measured parallel to the direction 30.

The spacer 31 allows the crank 12 and the rocker arm 15 to remain always perpendicular to the direction 30 and, in particular, prevents the unit 6 to tilt under the weight of the bottle 2.

The operation of the line 1 will now be described with reference to only one pick and place unit 6 of only one wheel 3 and starting from an instant wherein the considered unit 6 is arranged in its clamping position of a respective bottle 2 and is moved by the wheel 3 around respective axis 4.

Upstream of a releasing station 5 of the bottle 2, the tappet 21 engages the corresponding cam 20 to move in its releasing position and release the bottle 2 to a unit 6 of the successive wheel 3.

As a consequence of the displacement of the organs 8, 9 in their releasing position, the magnet 28 is moved by the arm 17 around the axis 11 so as to align with the corresponding magnet 29 in the direction 30 and to lock the unit 6 in its releasing position.

Once the tappet 21 disengages the cam 20 of the releasing station 5, the unit 6 is held in its releasing position by the magnetic locking device 27 and is advanced by the respective wheel 3 around the respective axis 4.

Upstream of a picking station 5 of a new bottle 2, the tappet 21 engages the corresponding cam 20 to move in its clamping position and to clamp the bottle 2 itself.

Following the displacement of the organs 8, 9 in their clamping position, the unit 6 is locked and maintained in its clamping position by the magnets 23 until arriving once again into the releasing station 5 of the bottle 2.

Since the organs 8, 9 are locked in their releasing position by the magnetic locking device 27, the cam 20 for opening the unit 6 is mounted only in correspondence to the releasing station 5 of the bottles 2 and is, therefore, relatively short and economical.

The organs 8, 9 are locked in their clamping position by the magnetic clamping device 22, which, unlike the springs traditionally used for this purpose, has a relatively high reliability and is not subject to wear.

According to an embodiment not shown, the assembly defined by the crank 12 and the gear 14 and the assembly defined by the rocker arm 15, the gear 18, and the spacer 31 are made of plastic material, in particular in plastic material PEEK.

The embodiment shown in Figures from 4 to 6 relates to a line 32 to convey bottles 2 comprising a plurality of feeding wheels 33, which are mounted so as to rotate in a continuous manner around respective rotation axes 34 substantially vertical and parallel to each other, and are connected together in correspondence of respective transferring stations 35.

Each wheel 33 is provided with a plurality of pick and place units 36, which are mounted below an upper disc 37 of the wheel 33, and are uniformly distributed around respective axis 34.

Each unit 6 of at least part of the wheels 33 comprises two picking organs 38, 39, which are mounted along a perimeter edge of the respective wheel 33 to rotate around respective rotation axes 40, 41 parallel to each other and to axes 34, and are movable one with respect to the other between a clamping position and a releasing position of a bottle 2.

The organ 38 comprises a crank 42 comprising, in turn, a substantially flat shaped jaw 43 made of a metallic material, and a gear 44, which extends around the axis 40, is made of a plastic material, and is locked by interference in a corresponding seat formed through the jaw 43 parallel to the axis 40 itself.

The organ 39 comprises a rocker arm 45, which is made of metallic material, has a first arm defining a shaped jaw 46 which cooperates with the jaw 43, and also has a second arm 47.

The organ 39 has, furthermore, a gear 48, which extends around the axis 41, is made in a single piece with the rocker arm 45, and is coupled to the gear 44.

The units 36 of each wheel 33 are moved between their clamping positions and their releasing positions by a cam actuating device 49 comprising, for each station 35, a respective cam 50 fixed to a support frame (not shown) of the wheel 33 and, for each unit 36, a respective tappet 51, which is fitted to an intermediate point of the arm 47 of the respective rocker arm 45, and is configured to engage the cams 50.

The organs 38, 39 of each unit 36 are locked in their clamping position by a magnetic clamping device 52 comprising two magnets 53 of opposite pole mounted one (hereinafter indicated 53a) in a seat formed in the free end of the arm 47 and the other (hereinafter indicated 53b) on a lower disk 54 of the wheel 33 so as to face each other when the organs 38, 39 are arranged in their clamping position.

About the above, it should be further pointed out that the magnets 53a, 53b are mounted radially between the axis 34 and the axes 40, 41 of the organs 38, 39.

The organs 38, 39 of each unit 36 are locked in their releasing position by a magnetic clamping device 55 comprising two magnets 56, 57 of opposite pole, which are wholly similar to the magnets 28, 29 previously described.

Each unit 36 also comprises a spacer 58, which is wholly similar to the spacer 31.

The operation of the line 32 is wholly similar to the operation of the line 1 and is easily deducible from the foregoing description.

Similarly as described above with respect to the organs 8, 9, even the assembly defined by crank 42 and gear 44 and the assembly defined by the rocker arm 45, the gear 48, and the spacer 58 may be made of plastic material, in particular in plastic material PEEK.

## Claims

1. A line to convey containers (2), in particular bottles, the line comprising a conveying device (3; 33), which is provided with a plurality of pick and place units (6; 36), each of which is configured to hold a respective container (2), is fed by the conveying device (3; 33) along a given path (P), comprises two picking organs (8, 9; 38, 39), which are mobile relative to one another between a clamping position, in which they clamp the container (2), and a releasing position, in which they release the container (2), and further comprises a first magnetic locking device (27; 55) to lock the relative picking organs (8, 9; 38, 39) in their releasing position; and an actuating device (19; 49) to move the picking organs (8, 9; 38, 39) of each pick and place unit (6; 36) between their clamping positions and their releasing positions; and being **characterized in that** the actuating device (19; 49) comprises at least one cam (20; 50), which is mounted along the path (P), and at least one tappet (21; 51), which is mounted on a first said picking organ (9; 39) and is engaged in the cam (20; 50); coupling means (14, 18; 44, 48) being interposed between the two picking organs (8, 9; 38, 39) so as to transmit the motion of the first picking organ (9; 39) to a second said picking organ (8; 38).

2. A line according to claim 1, wherein the first magnetic locking device (27; 55) has a pair of magnets (28, 29; 56, 57) with opposite poles comprising a first magnet (28; 56), which is supported by one of the picking organs (8, 9; 38, 39), and a second magnet (29; 57), which is supported by the conveying device (3; 33).

3. A line according to claim 2, wherein said first and second magnets (28, 29; 56, 57) are aligned with one another in a direction (30) that is transverse to said path (P) after a movement of the picking organs (8, 9; 38, 39) in their releasing position.

4. A line according to claim 3, wherein the conveying device (3; 33) comprises a plurality of feeding wheels mounted to rotate around respective rotation axes (4) parallel to each other and to said direction (30).

5. A line according to any of the claims from 2 to 4, wherein the two picking organs (8, 9; 38, 39) are mounted so as to rotate between their clamping and releasing positions around at least one rotation axis (10, 11; 40, 41), which is transverse to said path (P); the first magnet (28; 56) being fixed to one of the picking organs (8, 9; 38, 39) so as to move around the relative rotation axis (11; 41).

6. A line according to claim 5, wherein the second magnet (29; 57) is mounted along a feeding path of the first magnet (28; 67) around the relative rotation axis (11; 41).

7. A line according to any of the previous claims, wherein each pick and place unit (6; 36) comprises, furthermore, a second magnetic locking device (22; 52) to lock the relative picking organs (8, 9; 38, 39) in their clamping position.

8. A line according to claim 7, wherein the second magnetic locking device (22) comprises two further magnets (23) with opposite poles, which are each mounted on a relative picking organ (8, 9).

9. A line according to claim 8, wherein each pick and place unit (6) comprises, furthermore, a limit stop device (24) to stop the two picking organs (8, 9) in their clamping position in the absence of the container (2), so as to prevent said further magnets (23) from coming into contact with one another.

10. A line according to claim 8 or 9, wherein the conveying device (3) comprises at least one feeding wheel, which is mounted so as to rotate around its own longitudinal axis (4), and wherein the two picking organs (8, 9) are mounted so as to rotate between their clamping and releasing positions around at least one rotation axis (10, 11), which is parallel to the longitudinal axis (4); said further magnets (23) being mounted on the relative picking organs (8, 9) on the opposite side of said longitudinal axis (4) relative to said rotation axis (10, 11).

11. A line according to claim 7, wherein the second magnetic locking device (52) has a pair of further magnets (53a, 53b) with opposite poles comprising a first magnet (53a), which is supported by one of the picking organs (38, 39), and a second magnet (53b), which is supported by the conveying device (33).

12. A line according to claim 11, wherein the conveying device (33) comprises at least one feeding wheel, which is mounted so as to rotate around its own longitudinal axis (34), and wherein the two picking organs (38, 39) are mounted so as to rotate between their clamping and releasing positions around at least one rotation axis (40, 41), which is parallel to the longitudinal axis (34); said further magnets (53a, 53b) being mounted between said longitudinal axis (34) and said rotation axis (40, 41).

13. A line according to any of the previous claims, wherein the two picking organs (8, 9; 38, 39) comprise a crank (12; 42) and a rocker arm (15; 45), respectively, which are mounted so as to rotate around respective rotation axes (10, 11; 40, 41) parallel to one another between the clamping position and the releasing position.

14. A line according to any of the preceding claims, wherein the conveying device (3; 33) comprises an upper support plate (7; 37); the two picking organs (8, 9; 38, 39) of each pick and place unit (6; 36) being arranged under - and hinged to - the upper support plate (7; 37) so as to rotate between their clamping and releasing positions.

15. A line according to claim 14, wherein each pick and place unit (6; 36) comprises, furthermore, at least one spacer (31; 58), which is mounted on one of the picking organs (8, 9; 38, 39) and has a height that is substantially equal to a distance between the picking organ (8, 9; 38, 39) and the upper support plate (7; 37).

16. A line according to claim 15, when it depends on claim 2, wherein the spacer (31; 58) is mounted on the picking organ (8, 9; 38, 39) provided with the first magnet (28; 56).

## Patentansprüche

1. Linie zum Fördern von Behältern (2), insbesondere Flaschen, wobei die Linie umfasst eine Fördereinrichtung (3; 33), die mit einer Mehrzahl von Bestückungseinheiten (6; 36) versehen ist, von denen jede so konfiguriert ist, dass diese einen jeweiligen Behälter (2) hält, durch die Fördereinrichtung (3; 33) entlang eines gegebenen Weges (P) befördert wird, zwei Greiforgane (8, 9; 38, 39) umfasst, welche relativ zueinander zwischen einer Klemmposition, in welcher diese den Behälter (2) festklemmen, und einer Freigabeposition, in welcher diese den Behälter (2) freigeben, beweglich sind, und ferner eine erste magnetische Blockiereinrichtung (27; 55) umfasst, um die jeweiligen Greiforgane (8, 9; 38, 39) in ihrer Freigabeposition zu blockieren und eine Betätigungseinrichtung (19, 49), um die Greiforgane (8, 9; 38, 39) jeder Bestückungseinheit (6; 36) zwischen ihren Klemmpositionen und ihren Freigabepositionen zu bewegen, und **dadurch gekennzeichnet, dass** die Betätigungseinrichtung (19; 49) umfasst wenigstens eine Nocke (20; 50), welche entlang des Weges (P) angebracht ist, und wenigstens einen Stößel (21; 51), welcher auf einem ersten Greiforgan (9; 39) angebracht ist und an die Nocke (20; 50) angreift; wobei eine Kupplungseinrichtung (14, 18; 44, 48) zwischen den zwei Greiforganen (8, 9; 38, 39) angeordnet ist, um so die Bewegung des ersten Greiforgans (9; 39) auf ein zweites Greiforgan (8; 38) zu übertragen.

2. Linie nach Anspruch 1, in welcher die erste magnetische Blockiereinrichtung (27; 55) ein Paar Magnete (28, 29; 56, 57) mit entgegengesetzten Polen aufweist, das umfasst einen ersten Magneten (28; 56), der durch eines der Greiforgane (8, 9; 38, 39) getragen wird, und einen zweiten Magneten (29; 57), der durch die Fördereinrichtung (3; 33) getragen wird.

3. Linie nach Anspruch 2, in welcher der erste und zweite Magnet (28, 29; 56, 57) nach einer Bewegung der Greiforgane (8, 9; 38, 39) in ihre Freigabeposition zueinander in einer Richtung (30) ausgerichtet sind, die sich quer zu dem Weg (P) erstreckt.

4. Linie nach Anspruch 3, in welcher die Fördereinrichtung (3; 33) eine Mehrzahl von Zuführrädern umfasst, die so montiert sind, dass sich diese um jeweilige Drehachsen (4) parallel zueinander und zu der Richtung (30) drehen.

5. Linie nach einem der Ansprüche 2 bis 4, in welcher die zwei Greiforgane (8, 9; 38, 39) so montiert sind, dass sich diese zwischen ihrer Klemm- und Freigabeposition um wenigstens eine Drehachse (10, 11; 40, 41) drehen, die quer zu dem Weg (P) ist; wobei der erste Magnet (28; 56) an einem der Greiforgane (8, 9; 38, 39) fixiert ist, um sich so um die jeweilige Drehachse (11; 41) herum zu bewegen.

6. Linie nach Anspruch 5, in welcher der zweite Magnet (29; 57) entlang eines Zuführweges des ersten Magneten (28; 67) um die jeweilige Drehachse (11; 41) montiert ist.

7. Linie nach einem der vorhergehenden Ansprüche, in welcher jede Bestückungseinheit (6; 36) ferner eine zweite magnetische Blockiereinrichtung (22; 52) umfasst, um die jeweiligen Greiforgane (8, 9; 38, 39) in ihrer Klemmposition zu blockieren.

8. Linie nach Anspruch 7, in welcher die zweite magnetische Blockiereinrichtung (22) zwei weitere Magnete (23) mit entgegengesetzten Polen umfasst, die jeweils auf einem jeweiligen Greiforgan (8, 9) montiert sind.

9. Linie nach Anspruch 8, in welcher jede Bestückungseinheit (6) ferner eine Grenzanschlag-Einrichtung (24) umfasst, um die zwei Greiforgane (8, 9) in ihrer Klemmposition in Abwesenheit des Behälters (2) zu stoppen, um so zu verhindern, dass die zwei Magnete (23) in Kontakt miteinander gelangen.

10. Linie nach Anspruch 8 oder 9, in welcher die Fördereinrichtung (3) wenigstens ein Zuführrad umfasst, welches so angebracht ist, dass sich dieses um seine eigene Längsachse (4) dreht, und in welcher die zwei Greiforgane (8, 9) so angebracht sind, dass sich diese zwischen ihrer Klemm- und Freigabeposition um wenigstens eine Drehachse (10, 11) drehen, welche parallel zu der Längsachse (4) ist; wobei die weiteren Magnete (23) auf den jeweiligen Greiforganen (8, 9) in Bezug zu der Drehachse (10, 11) auf der gegenüberliegenden Seite der Längsachse (4) angebracht sind.

11. Linie nach Anspruch 7, in welcher die zweite magnetische Blockiereinrichtung (52) ein Paar weitere Magnete (53a, 53b) mit entgegengesetzten Polen hat, das aufweist einen ersten Magneten (53a), welcher durch eines der Greiforgane (38, 39) getragen wird, und einen zweiten Magneten (53b), welcher durch die Fördereinrichtung (33) getragen wird.

12. Linie nach Anspruch 11, in welcher die Fördereinrichtung (33) wenigstens ein Zuführrad umfasst, welches so montiert ist, dass sich dieses um seine eigene Längsachse (34) dreht, und in welcher die zwei Greiforgane (38, 39) so montiert sind, dass sich diese zwischen ihrer Klemm- und Freigabeposition um wenigstens eine Drehachse (40, 41) drehen, die parallel zu der Längsachse (34) ist; wobei die weiteren Magnete (53a, 53b) zwischen der Längsachse (34) und der Drehachse (40, 41) montiert sind.

13. Linie nach einem der vorhergehenden Ansprüche, in welcher die zwei Greiforgane (8, 9; 38, 39) eine Kurbel (12; 42) bzw. einen Kipphebel (15; 45) umfassen, die so montiert sind, dass sich diese zwischen der Klemmposition und der Freigabeposition um jeweilige Drehachsen (10, 11; 40, 41) parallel zueinander drehen.

14. Linie nach einem der vorhergehenden Ansprüche, in welcher die Fördereinrichtung (3; 33) eine obere Trägerplatte (7; 37) umfasst; wobei die zwei Greiforgane (8, 9; 38, 39) jeder Bestückungseinheit (6; 36) unter der oberen Trägerplatte (7; 37) angeordnet - und daran angelenkt - sind, um so zwischen ihrer Klemm- und Freigabeposition zu drehen.

15. Linie nach Anspruch 14, in welcher jede Bestückungseinheit (6; 36) ferner wenigstens einen Abstandshalter (31; 58) umfasst, welcher an einem der Greiforgane (8, 9; 38, 39) montiert ist und eine Höhe hat, die im Wesentlichen gleich dem Abstand zwischen dem Greiforgan (8, 9; 38, 39) und der oberen Trägerplatte (7; 37) ist.

16. Linie nach Anspruch 15, sofern dieser von Anspruch 2 abhängig ist, in welcher der Abstandshalter (31; 58) an dem mit dem ersten Magneten (28; 56) versehenen Greiforgan (8, 9; 38, 39) montiert ist.

## Revendications

1. Ligne pour transporter des contenants (2), en particulier des bouteilles, la ligne comprenant un dispositif de transport (3 ; 33) qui est muni d'une pluralité d'unités de préhension et de placement (6 ; 36), chacune desquelles est configurée pour maintenir un contenant respectif (2), est alimentée par le dispositif de transport (3 ; 33) le long d'une voie donnée (P), comprend deux organes de préhension (8, 9 ; 38, 39) qui sont mobiles les uns par rapport aux autres entre une position de serrage, dans laquelle ils serrent le contenant (2), et une position de libération, dans laquelle ils libèrent le contenant (2), et comprend en outre un premier dispositif de verrouillage magnétique (27 ; 55) pour verrouiller les organes de préhension relatifs (8, 9 ; 38, 39) dans leur position de libération ; et un dispositif d'actionnement (19 ; 49) pour déplacer les organes de préhension (8, 9 ; 38, 39) de chaque unité de préhension et de placement (6 ; 36) entre leurs positions de serrage et leurs positions de libération ; et étant **caractérisée en ce que** le dispositif d'actionnement (19 ; 49) comprend au moins une came (20 ; 50) qui est montée le long de la voie (P) et au moins un poussoir (21 ; 51) qui est monté sur un dit premier organe de préhension (9 ; 39) et est engagé dans la came (20 ; 50) ; des moyens de couplage (14, 18 ; 44, 48) étant interposés entre les deux organes de préhension (8, 9 ; 38, 39) de sorte à transmettre le mouvement du premier organe de préhension (9 ; 39) à un dit second organe de préhension (8 ; 38).

2. Ligne selon la revendication 1, dans laquelle le premier dispositif de verrouillage magnétique (27 ; 55) a une paire d'aimants (28, 29 ; 56, 57) avec des pôles opposés comprenant un premier aimant (28 ; 56) qui est supporté par un des organes de préhension (8, 9 ; 38, 39) et un second aimant (29 ; 57) qui est supporté par le dispositif de transport (3 ; 33).

3. Ligne selon la revendication 2, dans laquelle lesdits premier et second aimants (28, 29 ; 56, 57) sont alignés l'un sur l'autre dans une direction (30) qui est transversale à ladite voie (P) après un mouvement des organes de préhension (8, 9 ; 38 ; 39) dans leur position de libération.

4. Ligne selon la revendication 3, dans laquelle le dispositif de transport (3 ; 33) comprend une pluralité de roues d'alimentation montées pour tourner autour d'axes de rotation respectifs (4) parallèles les uns aux autres et à ladite direction (30).

5. Ligne selon l'une quelconque des revendications 2 à 4, dans laquelle les deux organes de préhension (8, 9 ; 38, 39) sont montés de sorte à tourner entre leurs positions de serrage et de libération autour d'au moins un axe de rotation (10, 11 ; 40, 41) qui est transversal à ladite voie (P) ; le premier aimant (28 ; 56) étant fixé à un des organes de préhension (8, 9 ; 38, 39) de sorte à se déplacer autour de l'axe de rotation relatif (11 ; 41).

6. Ligne selon la revendication 5, dans laquelle le second aimant (29 ; 57) est monté le long d'une voie d'alimentation du premier aimant (28 ; 67) du premier aimant (28 ; 67) autour de l'axe de rotation relatif (11 ; 41).

7. Ligne selon l'une quelconque des revendications précédentes, dans laquelle chaque unité de préhension et de placement (6 ; 36) comprend de plus un second dispositif de verrouillage magnétique (22 ; 52) pour verrouiller les organes de préhension relatifs (8, 9 ; 38, 39) dans leur position de serrage.

8. Ligne selon la revendication 7, dans laquelle le second dispositif de verrouillage magnétique (22) comprend deux aimants supplémentaires (23) avec des pôles opposés qui sont chacun montés sur un organe de préhension relatif (8, 9).

9. Ligne selon la revendication 8, dans laquelle chaque unité de préhension et de placement (6) comprend de plus un dispositif de butée limite (24) pour arrêter les deux organes de préhension (8, 9) dans leur position de serrage en l'absence du contenant (2) de sorte à empêcher lesdits aimants supplémentaires (23) de venir en contact l'un avec l'autre.

10. Ligne selon la revendication 8 ou 9, dans laquelle le dispositif de transport (3) comprend au moins une roue d'alimentation qui est montée de sorte à tourner autour de son propre axe longitudinal (4) et dans laquelle les deux organes de préhension (8, 9) sont montés de sorte à tourner entre leurs positions de serrage et de libération autour d'au moins un axe de rotation (10, 11) qui est parallèle à l'axe longitudinal (4) ; lesdits aimants supplémentaires (23) étant montés sur les organes de préhension relatifs (8, 9) sur le côté en regard dudit axe longitudinal (4) par rapport audit axe de rotation (10, 11).

11. Ligne selon la revendication 7, dans laquelle le second dispositif de verrouillage magnétique (52) a une paire d'aimants supplémentaires (53a, 53b) avec des pôles opposés comprenant un premier aimant (53a) qui est supporté par un des organes de préhension (38, 39) et un second aimant (53b) qui est supporté par le dispositif de transport (33).

12. Ligne selon la revendication 11, dans laquelle le dispositif de transport (33) comprend au moins une roue d'alimentation qui est montée de sorte à tourner autour de son propre axe longitudinal (34) et dans laquelle les deux organes de préhension (38, 39) sont montés de sorte à tourner entre leurs positions de serrage et de libération autour d'au moins un axe de rotation (40, 41) qui est parallèle à l'axe longitudinal (34) ; lesdits aimants supplémentaires (53a, 53b) étant montés entre ledit axe longitudinal (34) et ledit axe de rotation (40, 41).

13. Ligne selon l'une quelconque des revendications précédentes, dans laquelle les deux organes de préhension (8, 9 ; 38, 39) comprennent respectivement une manivelle (12 ; 42) et un bras oscillant (15 ; 45) qui sont montés de sorte à tourner autour d'axes de rotation respectifs (10, 11 ; 40, 41) parallèles les uns aux autres entre la position de serrage et la position de libération.

14. Ligne selon l'une quelconque des revendications précédentes, dans laquelle le dispositif de transport (3 ; 33) comprend une plaque de support supérieure (7 ; 37) ; les deux organes de préhension (8, 9 ; 38, 39) de chaque unité de préhension et de placement (6 ; 36) étant agencés sous, et articulés à, la plaque de support supérieure (7 ; 37) de sorte à tourner entre leurs positions de serrage et de libération.

15. Ligne selon la revendication 14, dans laquelle chaque unité de préhension et de placement (6 ; 36) comprend de plus au moins un écarteur (31 ; 58) qui est monté sur un des organes de préhension (8, 9 ; 38, 39) et a une hauteur qui est sensiblement égale à une distance entre l'organe de préhension (8, 9 ; 38, 39) et la plaque de support supérieure (7 ; 37).

16. Ligne selon la revendication 15, lorsqu'elle dépend de la revendication 2, laquelle l'écarteur (31 ; 58) est monté sur l'organe de préhension (8, 9 ; 38, 39) doté du premier aimant (28 ; 56).
